# EUROPÄISCHE PATENTSCHRIFT

(11) **EP 3 481 187 B1**
(45) Veröffentlichungstag und Bekanntmachung des Hinweises auf die Patenterteilung: **09.08.2023**
(21) Anmeldenummer: 17734110.4
(22) Anmeldetag: 04.07.2017
(51) Int. Cl.: A01M 21/04, B05B 12/00, B05B 12/08, B05B 12/12, B05B 12/14, A01M 7/00, B05B 9/08, B05B 7/32

(54) **SPRÜHGERÄT MIT DURCHFLUSSMESSUNG**
SPRAYING DEVICE WITH FLOW METERING
SYSTÈME DE PULVÉRISATION AVEC MESURE DE DÉBIT

(30) Priorität: 11.07.2016 EP 16178766; 11.07.2016 US 201662360548 P; 11.07.2016 EP 16178764; 11.07.2016 US 201662360555 P
(43) Veröffentlichungstag der Anmeldung: 15.05.2019
(73) Patentinhaber: Bayer CropScience Aktiengesellschaft, 40789 Monheim am Rhein (DE)
(72) Erfinder: GUTSMANN, Volker, 40764 Langenfeld (DE)
(74) Vertreter: BIP Patents
(86) Internationale Anmeldenummer: PCT/EP2017/066608
(87) Internationale Veröffentlichungsnummer: WO 2018/011009

(56) Entgegenhaltungen:
- EP-A1- 1 378 293
- WO-A1-2015/087805
- DE-A1-102013 109 785
- GB-A- 2 213 031
- US-A- 3 964 689
- US-A1- 2005 006 400
- US-A1- 2005 155 968

## Beschreibung

Die vorliegende Erfindung betrifft die Applikation von flüssigen Wirkstoffen mit Hilfe eines tragbaren Sprühgeräts. Gegenstand der vorliegenden Erfindung ist eine tragbare Vorrichtung zur Applikation von Wirkstoffen sowie ein Verfahren zur Applikation von Wirkstoffen mit Hilfe eines tragbaren Sprühgeräts.

Tragbare Sprühgeräte zum Applizieren von Wirkstoffen wie Pestiziden, Insektiziden, Herbiziden und Fungiziden sind bekannt (DE102013109785A1, US2006/0249223A1, US2006/0102245A1, US2006/0261181A1, US2005/0006400A1).

Weit verbreitet sind dabei Sprühgeräte, die als Kompressionssprüher bezeichnet werden. Sie umfassen einen Tank zur Aufnahme der zu versprühenden Flüssigkeit. Eine meist von Hand zu betätigende Luftdruckpumpe, die einen Teil des Tanks bildet, enthält einen üblichen Kolbenstangenaufbau und einen Betätigungshandgriff dafür. Diese Luftdruckpumpe wird verwendet, um über der zu versprühenden Flüssigkeit einen Luftdruck zu erzeugen. Das Unterdrucksetzen des Tanks wird dadurch bewirkt, dass die Bedienperson die Pumpe periodisch betätigt bis ein gewünschter Tankdruck erreicht ist. Die Sprühflüssigkeit tritt aufgrund des Luftdrucks, der auf sie ausgeübt wird, durch ein in die Flüssigkeit im Tank eintauchendes Rohr aus und strömt dann durch einen Schlauch, ein Sprühstrahlventil am äußeren Ende des Schlauches, ein Verlängerungsrohr und schließlich durch eine Sprühdüse hindurch zu dem ausgewählten Zielbereich.

Nachteilig an einem solchen Sprühgerät ist, dass der Austreibdruck durch die manuell betriebene Luftpumpe nicht konstant gehalten werden kann. Das Ergebnis ist ein sich mit der Flussgeschwindigkeit änderndes Sprühmuster. Dementsprechend kann der Wirkstoff nur ungenau dosiert werden.

Eine elektrisch betriebene Luftpumpe kann hier Abhilfe schaffen, aber für eine gezielte, genaue und gleichmäßige Applikation des Wirkstoffs ist es erforderlich, dass der Druck im Tank konstant gehalten wird. Zudem muss der Tank druckstabil sein. Meistens sind solche Tanks daher aus Metall oder dickwandigem Kunststoff gefertigt.

Pestizide, Insektizide, Herbizide und Fungizide werden heute zunehmend in Form von Konzentraten auf den Markt gebracht. Konzentrate haben den Vorteil geringerer Transportkosten. Der Anwender muss den Wirkstoff vor Verwendung verdünnen. Die Verdünnungsvorschiften finden sich gewöhnlich auf der Verpackung oder einem Beipackzettel.

Eine vom Anwender vorgenommene Verdünnung ist jedoch aus folgenden Gründen nachteilig: Der Anwender kann in unerwünschten Kontakt mit dem Wirkstoff kommen. Es ist denkbar, dass sich der Anwender bei der Berechnung der Mengen an Konzentrat und Verdünnungsmittel vertut. Eine hohe Viskosität des Konzentrats kann zu einer ungenauen volumetrischen Abmessung der erforderlichen Menge führen.

Eine ungenaue Dosierung von Wirkstoffen kann eine Reihe von ungewollten Folgen haben: Die Behandlung des besprühten Objekts kann wirkungslos sein oder es kann zu einer Überdosierung kommen. Es ist denkbar, dass behördliche Vorschiften über abgegebene Mengen nicht eingehalten werden. Es ist denkbar, dass Fehler in der Bestandsüberwachung auftreten, da die abgegebenen Mengen falsch berechnet wurden.

Ein weiterer Nachteil des oben beschriebenen Sprühgeräts besteht darin, dass der Tank bei Verwendung eines anderen Wirkstoffs zunächst gereinigt werden muss. Gegebenenfalls muss die Reinigungsflüssigkeit entsorgt werden.

Bei der Verwendung von einem Wirkstoffkonzentrat, das vor der Applikation in dem Sprühgerät mit einem Verdünnungsmittel durchmischt wird, ist für eine ausreichende Durchmischung von Konzentrat und Verdünnungsmittel zu sorgen.

Ausgehend vom beschriebenen Stand der Technik bestand die Aufgabe darin, eine tragbare Vorrichtung zur Applikation von Wirkstoffen bereitzustellen, die einfach in der Handhabung ist, bei der keine manuelle Verdünnung von Konzentraten erforderlich ist, die eine genau definierbare Menge an Wirkstoff abgibt, bei der keine aufwändige Reinigung erforderlich ist, und bei der Wirkstoff mit einem Verdünnungsmittel durchmischt wird.

Erfindungsgemäß wird diese Aufgabe durch den Gegenstand der unabhängigen Ansprüche 1 und 8 erfüllt. Bevorzugte Ausführungsformen finden sich in den abhängigen Ansprüchen sowie in der Beschreibung.

Ein erster Gegenstand der vorliegenden Erfindung ist damit ein transportables Sprühgerät zur Schädlingsbekämpfung, umfassend
- einen ersten Behälter (10) zur Aufnahme einer ersten Flüssigkeit (11), wobei es sich bei der ersten Flüssigkeit um ein Verdünnungsmittel handelt,
- Mittel (22a) zum Anschluss eines zweiten Behälters (20) mit einer zweiten Flüssigkeit (21) an das Sprühgerät, wobei es sich bei der zweiten Flüssigkeit um ein Pestizid-Konzentrat handelt,
- eine Sprühdüse (30),
- eine erste (15) und eine zweite (25) elektrisch betriebene Pumpe zur Förderung der ersten und der zweiten Flüssigkeit aus ihren Behältern in Richtung Sprühdüse (30),
- einen Durchflussmesser (2) zur Messung des Flusses der ersten Flüssigkeit (11) aus dem ersten Behälter (10) in Richtung der Sprühdüse (30),
- eine Mischkammer (80), mit einem Einlass für die erste Flüssigkeit, einem Einlass für die zweite Flüssigkeit und einem Auslass für eine Mischung von erster und zweiter Flüssigkeit,
- eine Kontrolleinheit (1), die so konfiguriert ist, dass sie den Fluss der zweiten Flüssigkeit in Richtung der Sprühdüse (30) auf Basis des gemessenen Flusses der ersten Flüssigkeit so regelt, dass die erste Flüssigkeit und die zweite Flüssigkeit das Sprühgerät über die Sprühdüse (30) als Mischung mit einem konstanten Mischungsverhältnis verlassen,
- wobei das Sprühgerät als Rucksack-Gerät ausgeführt ist, wobei der erste Behälter mit Gurten zum Tragen auf dem Rücken ausgestattet ist, so dass ein Benutzer einen Teil des Sprühgeräts, das den ersten Behälter (10) umfasst, auf dem Rücken transportieren und tragen kann,
dadurch gekennzeichnet, dass die Mischkammer (80) ein Sieb mit einer Maschenweite im Bereich von 10 µm bis 500 µm, mehr bevorzugt 50 bis 250 µm, am meisten bevorzugt 80 µm bis 120 µm umfasst, durch das die zweite Flüssigkeit bei Betrieb des Sprühgeräts in die erste Flüssigkeit gedrückt wird oder durch das eine Mischung der ersten Flüssigkeit und der zweiten Flüssigkeit bei Betrieb des Sprühgeräts hindurchtritt.

Ein weiterer Gegenstand der vorliegenden Erfindung ist ein Verfahren zur Schädlingsbekämpfung durch Applikation einer Mischung aus einer ersten und einer zweiten Flüssigkeit auf ein Zielobjekt mittels eines transportablen Sprühgeräts, umfassend einen ersten Behälter, eine Sprühdüse und ein Ventil, wobei das Sprühgerät als Rucksack-Gerät ausgeführt ist, wobei der erste Behälter mit Gurten zum Tragen auf dem Rücken ausgestattet ist, so dass ein Benutzer einen Teil des Sprühgeräts, das den ersten Behälter (10) umfasst, auf dem Rücken transportieren und tragen kann,
wobei es sich bei der ersten Flüssigkeit um ein Verdünnungsmittel handelt,
wobei es sich bei der zweiten Flüssigkeit um ein Pestizid-Konzentrat handelt,
wobei das Verfahren die folgenden Schritte umfasst:
   - Füllen des ersten Behälters mit der ersten Flüssigkeit,
   - Anschließen eines zweiten Behälters mit der zweiten Flüssigkeit an das Sprühgerät,
   - Richten der Sprühdüse auf das Zielobjekt,
   - Öffnen des Ventils, und
   - Applizieren der Mischung,
wobei bei Öffnen des Ventils die erste Flüssigkeit mit Hilfe einer ersten elektrisch betriebenen Pumpe aus dem ersten Behälter in Richtung Sprühdüse gefördert wird, die zweite Flüssigkeit durch eine zweite elektrisch betriebene Pumpe in Richtung Sprühdüse gefördert wird, der Fluss der ersten Flüssigkeit mittels eines Durchflussmessers gemessen wird und die Messwerte an eine Kontrolleinheit übertragen werden, die Kontrolleinheit den Fluss der zweiten Flüssigkeit aus dem zweiten Behälter in Richtung der Sprühdüse regelt, so dass die erste und die zweite Flüssigkeit in einem konstanten Mischungsverhältnis durch die Sprühdüse treten,
dadurch gekennzeichnet, dass die erste und die zweite Flüssigkeit in einer Mischkammer des Sprühgeräts zusammengeführt werden, die ein Sieb mit einer Maschenweite im Bereich von 10 µm bis 500 µm, mehr bevorzugt 50 bis 250 µm, am meisten bevorzugt 80 µm bis 120 µm umfasst, durch das die zweite Flüssigkeit in die erste Flüssigkeit gedrückt wird oder durch das eine Mischung der ersten Flüssigkeit und der zweiten Flüssigkeit hindurchtritt.

Erfindungsgemäß erfolgt die Mischung der ersten und der zweiten Flüssigkeit automatisch - eine manuelle Mischung durch einen Benutzer ist nicht erforderlich. Die erste und die zweite Flüssigkeit werden in separaten Behälter vorgehalten und werden erst unmittelbar vor der Applikation auf das Zielobjekt zusammengeführt. Dadurch können eventuelle Fehler des Anwenders beim Herstellen der Mischung und eine versehentliche Kontamination des Anwenders mit den Flüssigkeiten vermieden werden.

Beide Flüssigkeiten werden in Richtung Sprühdüse gefördert. Sie verlassen das Sprühgerät durch die Sprühdüse gemeinsam als Mischung. Das Mischungsverhältnis wird automatisch auf Basis des Flusses der ersten Flüssigkeit eingestellt. Dazu misst ein Durchflussmesser den Fluss der ersten Flüssigkeit aus dem ersten Behälter in Richtung Sprühdüse und übermittelt die Messwerte an die Kontrolleinheit. Die Kontrolleinheit regelt dann anhand dieses Flusses der ersten Flüssigkeit den Fluss der zweiten Flüssigkeit in Richtung Sprühdüse. Sinkt beispielsweise der Fluss der ersten Flüssigkeit, wird der Fluss der zweiten Flüssigkeit verringert, so dass das Mischungsverhältnis konstant bleibt. Steigt der Fluss der ersten Flüssigkeit, wird der Fluss der zweiten Flüssigkeit entsprechend erhöht.

Der zweite Behälter mit der zweiten Flüssigkeit ist als austauschbarer Behälter ausgeführt, so dass verschiedene Flüssigkeiten mit dem erfindungsgemäßen Sprühgerät verwendet werden können. Dadurch ist das Sprühgerät vielfältig einsetzbar.

Die einzelnen Elemente, die das erfindungsgemäße Sprühgerät und das erfindungsgemäße Verfahren kennzeichnen, werden nachfolgend näher erläutert. Bei dieser Erläuterung wird nicht zwischen Sprühgerät und Verfahren unterschieden. Stattdessen gelten die nachfolgenden Beschreibungen für alle Erfindungsgegenstände in analoger Weise, unabhängig davon, in welchem Kontext sie stehen.

Das erfindungsgemäße Sprühgerät ist transportabel. Unter transportabel wird verstanden, dass das Gerät von einem Menschen ohne maschinelle Hilfsmittel von einem Ort zu einem anderen Ort gebracht werden kann.

Das Gerät ist so ausgeführt, dass der Benutzer einen Teil des Sprühgeräts, der den ersten Flüssigkeitsbehälter umfasst, auf dem Rücken tragen und transportieren kann (Rucksack-Gerät). Ein anderer Teil, der die Sprühdüse umfasst, wird mit einer Hand getragen, die zweite Hand ist frei. Zum Tragen des Behälters auf dem Rücken ist er mit entsprechenden Gurten ausgestattet.

Das Sprühgerät ist mit einem ersten Behälter zur Aufnahme einer ersten Flüssigkeit ausgestattet.

Der Begriff "Flüssigkeit" soll hier auch Lösungen, Emulsionen und Suspensionen erfassen.

Bei der ersten Flüssigkeit handelt es sich um ein Verdünnungsmittel. Das Verdünnungsmittel wird eingesetzt, um die zweite Flüssigkeit, die sich in dem zweiten Behälter befindet, zu verdünnen.

In einer bevorzugten Ausführungsform handelt es sich bei dem Verdünnungsmittel um Wasser.

Der erste Behälter weist vorzugsweise eine Öffnung auf, die mit einem wiederverschließbaren Verschluss verschlossen werden kann. Über diese Öffnung kann der erste Behälter mit der ersten Flüssigkeit befüllt werden.

Der erste Behälter kann aus einem beliebigen Material bestehen, das mit der ersten Flüssigkeit kompatibel ist. Der Begriff "kompatibel" bedeutet, dass das Material durch die erste Flüssigkeit nicht chemisch angegriffen wird und dass das Material für die erste Flüssigkeit undurchlässig ist.

Je nach eingesetztem Mittel zur Förderung der ersten Flüssigkeit aus dem ersten Behälter in Richtung Sprühdüse muss der erste Behälter einem Überdruck standhalten oder er kann drucklos betrieben werden. In einer Ausführungsform der vorliegenden Erfindung ist der erste Behälter ein Drucktank, der mit einem Druck beaufschlagt werden kann, um die erste Flüssigkeit mittels Druck aus dem ersten Behälter in Richtung Sprühdüse zu fördern.

In einer bevorzugten Ausführungsform wird der erste Behälter drucklos betrieben. Dadurch, dass der Behälter keinem Überdruck standhalten muss, kann er aus dünnwandigerem und leichterem Material gefertigt werden.

In einer ganz besonders bevorzugten Ausführungsform ist der erste Behälter als flexibler Beutel ausgeführt. Ein solcher Beutel weist vorzugsweise Gurte auf, damit er wie ein Rucksack auf den Rücken geschnallt und getragen werden kann.

Das erfindungsgemäße Sprühgerät weist ferner Mittel zum Anschluss eines zweiten Behälters mit einer zweiten Flüssigkeit an das Sprühgerät auf. Wie bereits oben erwähnt, handelt es sich bei der zweiten Flüssigkeit um ein Konzentrat, das mittels des Verdünnungsmittels verdünnt werden soll. Es handelt sich bei der zweiten Flüssigkeit um eine Wirkstoffformulierung, die ein Pestizid umfasst. Es handelt sich bei der zweiten Flüssigkeit um ein Pestizid-Konzentrat.

Vorzugsweise handelt es sich bei dem Pestizid um ein Mittel zur Bekämpfung tierischer Schädlinge, noch mehr bevorzugt um ein Akarizid (gegen Milben/Spinnentiere), ein Insektizid (gegen Schadinsekten) oder ein Rodentizid (gegen Nagetiere).

Erfindungsgemäß ist der zweite Flüssigkeitsbehälter austauschbar, das bedeutet, man kann einen mit der zweiten Flüssigkeit befüllten Behälter reversibel an das Sprühgerät anschließen. Der zweite Flüssigkeitsbehälter wird vorzugsweise dann wieder entfernt und ggf. durch einen anderen Behälter ersetzt, wenn er entleert worden ist.

Mittel zum reversiblen Anschließen eines Behälters sind hinreichend bekannt. Bei den Mitteln zum Anschließen des Behälters kann es sich beispielsweise um eine Schraub- oder Bajonettverbindung handeln. Dabei befinden sich zueinander kompatible Verbindungsmittel am Sprühgerät und am zweiten Behälter.

Der zweite Behälter ist so ausgeführt, dass er zur zweiten Flüssigkeit kompatibel ist - er ist für die zweite Flüssigkeit also undurchlässig und wird durch die zweite Flüssigkeit nicht chemisch angegriffen.

Der zweite Behälter kann als Einweg- oder Mehrwegbehälter ausgeführt sein, d.h. er ist entweder wiedereinsetzbar oder er ist nicht zur Wiederverwendung geeignet.

In einer bevorzugten Ausführungsform ist der zweite Behälter zumindest teilweise aus Kunststoff ausgeführt. Kunststoffe sind dafür bekannt, dass sie vielen Stoffen gegenüber chemisch inert sind. Sie sind zudem leicht, lassen sich gut verarbeiten und in nahezu beliebige Formen bringen.

In einer bevorzugten Ausführungsform ist der zweite Behälter als Druckbehälter ausgeführt. Vorzugsweise enthält er neben der zweiten Flüssigkeit ein von der zweiten Flüssigkeit getrenntes, unter Druck stehendes Treibmittel. Der zweite Behälter weist vorzugsweise ein Ventil auf. Vorzugsweise wird das Ventil automatisch geöffnet, wenn der zweite Behälter an das erfindungsgemäße Sprühgerät angeschlossen wird. Das unter Druck stehende Treibmittel drückt die zweite Flüssigkeit aus dem zweiten Behälter in das Sprühgerät. Ein weiteres, in dem Sprühgerät befindliches Ventil stoppt den weiteren Fluss der zweiten Flüssigkeit. Dieses weitere Ventil öffnet sich vorzugsweise dann, wenn ein Nutzer einen Applikationsvorgang, üblicherweise durch Betätigen eines Handgriffs, startet.

Der zweite, als Druckbehälter ausgeführte Behälter kann beispielsweise aus Aluminium oder Weißblech bestehen - Materialien, die druckbeständig sind und beispielsweise in Spraydosen (z.B. Rasierschaum) verwendet werden.

Es ist denkbar, dass der zweite Behälter einen Beutel mit der zweiten Flüssigkeit enthält, wobei der Beutel mit dem Ventil verbunden ist (Ventilbeutelsystem). Das Treibmittel umgibt den mit der zweiten Flüssigkeit befüllten Beutel und übt den notwendigen Druck für das Herausdrücken der zweiten Flüssigkeit aus dem zweiten Behälter aus (siehe z.B. DE69820260T2, US5505039, EP0718213A).

Denkbar ist aber auch, dass Treibmittel und zweite Flüssigkeit durch einen Kolben voneinander getrennt sind (siehe z.B. DE3934237A1). Das Treibmittel übt einen Druck auf den Kolben auf. Ist das Ventil geöffnet, wird die zweite Flüssigkeit durch den Kolben aus dem zweiten Behälter gedrückt. Denkbar ist beispielsweise die Verwendung eines ZIMA-Kolbens.

In einer bevorzugten Ausführungsform der vorliegenden Erfindung weist der zweite Behälter Mittel auf, die eine Kommunikation mit der Kontrolleinheit des Sprühgeräts erlauben. In einer bevorzugten Ausführungsform erlauben es diese Mittel der Kontrolleinheit, ein Mischungsverhältnis zu ermitteln. Denkbar ist beispielsweise, dass die Mittel zum Anschließen des zweiten Behälters an das Sprühgerät über elektrische Kontakte verfügen, die beim Anschließen des zweiten Behälters einen elektrischen Kontakt zwischen Sprühgerät und Kontrolleinheit herstellen, über den eine elektronische Kommunikation zwischen Kontrolleinheit und zweitem Behälter ermöglicht wird. Der zweite Behälter kann beispielsweise einen elektronischen Speicher umfassen, der über den hergestellten Kontakt von der Kontrolleinheit ausgelesen werden kann. In diesem Speicher können Informationen über die im zweiten Behälter vorhandene Flüssigkeit gespeichert sein. Insbesondere kann dort ein Verdünnungsgrad abgelegt sein, d.h. Informationen darüber, in welchem Verhältnis die erste und die zweite Flüssigkeit miteinander gemischt werden sollen.

Da es sich bei der zweiten Flüssigkeit um ein Konzentrat handelt, das vor der Applikation mit einem Verdünnungsmittel verdünnt werden muss, sollte der einzustellende Verdünnungsgrad an oder auf dem Behälter vermerkt und/oder gespeichert sein. In der beschriebenen bevorzugten Ausführungsform ist der einzustellende Verdünnungsgrad in einer Form gespeichert, in der er von der Kontrolleinheit ermittelt werden kann. Dies kann wie beschrieben über eine elektronische Kommunikation erfolgen. Neben der beschriebenen kontaktbehafteten Kommunikation ist natürlich auch eine kontaktlose Kommunikation möglich, d.h. über elektromagnetische Wellen (Bluetooth, Nahfeld-Kommunikation, u.a.).

Des Weiteren verfügt das erfindungsgemäße Sprühgerät über eine Sprühdüse. Über die Sprühdüse wird eine Mischung aus der ersten und der zweiten Flüssigkeit auf ein Zielobjekt abgegeben. Über die Sprühdüse kann eine gewünschte räumliche Verteilung der applizierten Mischung erreicht werden. Üblicherweise verwandelt die Sprühdüse die Flüssigkeit, die durch sie hindurchtritt, in Tropfen mit einer spezifischen Tropfengrößenverteilung, die unter anderem vom Druck der Flüssigkeit, von der Fließgeschwindigkeit der Flüssigkeit und der Geometrie der Sprühdüse abhängt.

Vorzugsweise ist die Sprühdüse austauschbar, so dass ein Anwender eine an die Applikation und das Zielobjekt angepasste Sprühdüse mit einer gewünschten Tropfengrößenverteilung und räumlichen Verteilung des Sprühguts auswählen kann.

Die Sprühdüse kann beispielsweise lanzenförmig oder pistolenförmig sein oder ein andere Form aufweisen. Vorzugsweise ist sie so ausgeführt, dass sie vom Benutzer mit einer Hand gehalten und auf das Zielobjekt gerichtet werden kann.

Üblicherweise weist die Sprühdüse einen Handgriff auf, der vom Nutzer betätigt wird, um einen Sprühvorgang zu starten. Üblicherweise wird durch Betätigen des Handgriffs ein Ventil geöffnet, so dass erste und zweite Flüssigkeit aus ihren jeweiligen Behältern in Richtung Sprühdüse und durch die Sprühdüse auf das Zielobjekt gefördert werden.

In einer bevorzugten Ausführungsform weisen die auswechselbare Sprühdüse und die Kontrolleinheit Mittel auf, die es der Kontrolleinheit ermöglichen, die Anwesenheit einer Sprühdüse und/oder die Art der anwesenden Sprühdüse zu erkennen. Es ist zum Beispiel denkbar, dass die Kontrolleinheit nur dann die Förderung der Flüssigkeiten aus ihren Behältern in Richtung Sprühdüse einleitet, wenn auch eine Sprühdüse angeschlossen ist. Ist keine Sprühdüse angeschlossen, erfolgt aus z.B. Sicherheitsgründen keine Förderung. Weiterhin ist denkbar, dass die Kontrolleinheit die Parameter zur Förderung der Flüssigkeiten an die Art der vorhandenen Sprühdüse anpasst, um ein optimales Sprühergebnis zu ermöglichen. Es ist denkbar, dass eine Sprühdüse einen Mindestdruck der ankommenden Flüssigkeit benötigt, um eine gewünschte räumliche Verteilung der Sprühflüssigkeit zu erzeugen. Dieser Mindestdruck könnte an der Sprühdüse in einer Weise kodiert sein, die von der Kontrolleinheit gelesen werden kann, so dass der Benutzer derartige Parameter nicht manuell einstellen muss.

Vor der Sprühdüse ist vorzugsweise ein Ventil angebracht. Vorzugsweise kann dieses Ventil manuell betätigt werden, so dass der Benutzer die Sprühdüse auf das Zielobjekt richten und durch manuelles Öffnen des Ventils den Sprühvorgang starten kann.

Denkbar ist auch, dass das Ventil automatisch geöffnet wird. Denkbar ist zum Beispiel, dass das Sprühgerät über einen Sensor verfügt, der die Lage der Sprühdüse im Raum erkennt und bei einer bestimmten Lage das Ventil automatisch öffnet oder schließt. Denkbar ist zum Beispiel, dass das Ventil geschlossen ist, wenn die Sprühdüse zum Boden gerichtet ist und geöffnet wird, wenn die Sprühdüse in die Waagerechte gehoben wird.

Denkbar ist auch, dass das Ventil automatisch geöffnet wird, wenn sich die Sprühdüse dem Zielobjekt nähert. Dies kann beispielsweise mittels Sensoren oder GPS-gestützt (GPS=Globales Positionsbestimmungssystem) erfolgen.

Das erfindungsgemäße Sprühgerät weist ferner Mittel zum Fördern der ersten Flüssigkeit aus dem ersten Behälter in Richtung Sprühdüse auf.

Die Mittel zum Fördern der ersten Flüssigkeit aus dem ersten Behälter in Richtung Sprühdüse umfassen eine elektrische Pumpe. Eine Pumpe hat gegenüber einem mit Druck beaufschlagten ersten Behälter den Vorteil, dass der erste Behälter nicht druckfest konstruiert sein muss und damit leichter zu transportieren ist. Der erste Behälter könnte prinzipiell sogar offen sein.

Das erfindungsgemäße Sprühgerät weist einen Durchflussmesser zur Messung des Flusses der ersten Flüssigkeit aus dem ersten Behälter in Richtung der Sprühdüse auf. Mit einem solchen Durchflussmesser wird die pro Zeiteinheit in Richtung Sprühdüse fließende Flüssigkeitsmenge erfasst. Unter Flüssigkeitsmenge wird je nach verwendetem Messverfahren das Volumen oder die Masse verstanden.

Der Durchflussmesser ist vorzugsweise einer, der üblicherweise in geschlossenen Rohrleitungen eingesetzt wird, wie beispielsweise ein magnetisch-induktiver Durchflussmesser, ein Schwebekörper-Durchflussmesser, ein Ultraschall-Durchflussmesser, ein Coriolis-Massendurchflussmesser, ein kalorimetrischer Durchflussmesser oder ein Vortex-Durchflussmesser. Denkbar ist aber auch die Verwendung einer Messblende oder eine Staudrucksonde.

In einer bevorzugten Ausführungsform wird die Durchflussmessung mit Hilfe eines Differenzdrucksensors vorgenommen.

In einer weiteren bevorzugten Ausführungsform wird ein Flügelradsensor zur Durchflussmessung eingesetzt. Das Messprinzip beruht darauf, dass ein Flügelrad eine Drehzahl proportional zur Strömungsgeschwindigkeit eines Fluids annimmt, durch das das Flügelrad angetrieben wird. Zur Messung der Drehzahl kann ein Permanentmagnet an das Flügelrad angebracht werden, der sich mit dem Flügelrad mitbewegt. Ein Hall-Sensor, an dem sich der Permanentmagnet vorbeibewegt, kann als Impulszähler verwendet werden. Die pro Zeiteinheit gemessene Anzahl von Impulsen ist proportional zur Drehzahl des Flügelrads und damit zur Strömungsgeschwindigkeit des Fluids.

Details zur Durchflussmessung können beispielsweise dem folgenden Lehrbuch entnommen werden: K.W. Bonfig: Technische Durchflussmessung, Vulkan-Verlag Essen, 3. Auflage, 2002, ISBN 3-8027-2190-X.

Anhand der Flüssigkeitsmenge der in Richtung Sprühdüse fließenden ersten Flüssigkeit regelt die Kontrolleinheit den Fluss der zweiten Flüssigkeit aus dem zweiten Behälter in Richtung Sprühdüse.

Das erfindungsgemäße Sprühgerät umfasst Mittel zum Fördern der zweiten Flüssigkeit aus dem zweiten Behälter in Richtung Sprühdüse. Hierbei handelt es sich um eine elektrische Pumpe, die in einer Kommunikationsverbindung mit der Kontrolleinheit steht.

In einer besonders bevorzugten Ausführungsform wird eine Schrittmotor-Dosierpumpe verwendet (siehe z.B.: DE102004047584, WO2012048976, DE102009006203). Durch den Schrittmotorantrieb können auch kleine Mengen der zweiten Flüssigkeit mit hoher Genauigkeit der ersten Flüssigkeit beigemengt werden.

Die erste und die zweite Flüssigkeit verlassen das Sprühgerät gemeinsam als Mischung durch die Sprühdüse. Es wäre denkbar, dass die erste Flüssigkeit und die zweite Flüssigkeit in der Sprühdüse über entsprechende Zuleitungen zusammengeführt werden. Es hat sich jedoch gezeigt, dass die erste und zweite Flüssigkeit in diesem Fall nicht ausreichend durchmischt sind, wenn sie auf das Zielobjekt gelangen. Es existiert daher eine Mischkammer vor der Sprühdüse, in welche die erste und die zweite Flüssigkeit über zwei separate Zuleitungen eingebracht werden. In der Mischkammer kommt es dann zu einer Durchmischung der ersten und der zweiten Flüssigkeit, bevor die Mischung in die Sprühdüse eintritt.

Die Mischkammer verfügt dementsprechend über einen Einlass für die erste Flüssigkeit, einen Einlass für die zweite Flüssigkeit und einen Auslass für eine Mischung von erster und zweiter Flüssigkeit. Die Mischkammer kann auch ein Abschnitt der Zuleitung für die erste Flüssigkeit zur Sprühdüse sein, in den eine Leitung für die zweite Flüssigkeit mündet.

Die Durchmischung der ersten und der zweiten Flüssigkeit kann durch geeignete Maßnahmen gefördert werden, beispielsweise durch statische Mischelemente.

Die Leitungen zwischen dem zweiten Behälter und der Mischkammer sind vorzugsweise so ausgeführt, dass sie ein geringes Volumen aufweisen. Nach einem Applikationsvorgang verbleiben Restmengen der (unverdünnten) zweiten Flüssigkeit in den Leitungen zwischen zweitem Behälter und Mischkammer. Gegebenenfalls müssen diese Restmengen entsorgt werden; ggf. müssen die Leitungen bei einem Wechsel des zweiten Behälters gereinigt werden. Je geringer das Volumen ist, desto geringer sind die Restmengen, die entsorgt werden müssen und so geringer ist das zu reinigende Volumen. Vorzugsweise beträgt das Volumen, das die zweite Flüssigkeit auf ihrem Weg in Richtung Mischkammer zwischen dem zweiten Behälter und der Mischkammer einnehmen kann, weniger als 50 mL, noch mehr bevorzugt weniger als 30 mL, noch mehr bevorzugt weniger als 10 mL.

Vorzugsweise wird die zweite Flüssigkeit quer zur Strömungsrichtung der ersten Flüssigkeit dieser beigefügt. Der Begriff "quer" bedeutet: in einem Winkel im Bereich von 20° bis 160°, bevorzugt 50° bis 130°, mehr bevorzugt 70° bis 110°, am meisten bevorzugt 80° bis 100°.

In einer bevorzugten Ausführungsform wird die zweite Flüssigkeit durch einen Stromteiler in die erste Flüssigkeit dosiert. In einer weiteren bevorzugten Ausführungsform wird die zweite Flüssigkeit in die erste Flüssigkeit dosiert und beide Flüssigkeiten durchlaufen gemeinsam einen Stromteiler. Ein Stromteiler ist ein statisches Element, das einen Strom einer Flüssigkeit in eine Mehrzahl an Stromfäden aufteilt. Erfindungsgemäß ist der Stromteiler in Form eines Siebs ausgeführt, d.h. die Flüssigkeit(en) wird(werden) in Strömungsrichtung durch ein Sieb gedrückt, das den Strom in Stromfäden zerteilt. Durch ein solches Sieb werden insbesondere Tropfen der zweiten Flüssigkeit, die in die erste Flüssigkeit gelangen, in eine Mehrzahl an kleinen Tropfen zerteilt. Turbulenzen hinter dem Sieb führen zu einer Dispersion der kleinen Tropfen in der ersten Flüssigkeit. Überraschend wurde gefunden, dass ein solches Sieb als statisches Mischelement ausreichend ist, um an der Sprühdüse eine ausreichende Durchmischung von erster und zweiter Flüssigkeit zu erzielen. Wird kein Sieb verwendet, kann beobachtet werden, dass einzelne Tropfen der zweiten Flüssigkeit über den Leitungsweg von Mischkammer zur Sprühdüse erhalten bleiben und damit eine inhomogene Mischung die Sprühdüse verlässt. Weitergehende statische Mischelemente als ein Sieb sind überraschenderweise nicht nötig, um an der Sprühdüse eine ausreichende Durchmischung zu erzielen. Ein Sieb hat zudem gegenüber einem klassischen Statikmischer, der abwechselnd den Fluidstrom aufteilt, verdrillt und zusammenfügt, den Vorteil eines wesentlich geringeren Druckverlusts. Vor der Sprühdüse sollte ein Druck herrschen, der in einem definierten Bereich liegt, damit die Sprühdüse eine gewünschte räumliche Verteilung der Flüssigkeit erzielen kann. Dieser Druck wird durch die Fördermittel des Sprühgeräts bereitgestellt. Der Druck, der durch die Fördermittel bereitgestellt wird, muss jedoch höher sein, als der vor der Sprühdüse gewünschte Druck, um den Druckverlust über die vorhandenen Zuleitungen, Mischkammer, Mischelemente etc. zu kompensieren. Ein höherer Druckverlust bedeutet jedoch auch einen höheren Energieaufwand zur Kompensation des Druckverlusts und/oder einen höheren Druck im ersten und zweiten Behälter, der dickere Behälterwandungen und damit eine höhere Traglast zur Folge hat. Vorzugsweise ist das Sieb wie ein Netz mit einer Maschenweite von 10 µm bis 500 µm, mehr bevorzugt 50 µm bis 250 µm, am meisten bevorzugt 80 µm bis 120 µm ausgeführt. Die Stege zwischen den Maschen haben üblicherweise eine Breite, die geringer ist als die Maschenweite, um den Strömungswiderstand und damit den Druckverlust so gering wie möglich zu halten.

Das erfindungsgemäße Sprühgerät weist eine Kontrolleinheit auf. Diese Kontrolleinheit sorgt für eine Regelung der Menge der zweiten Flüssigkeit aus dem zweiten Behälter in Richtung Sprühdüse. Diese Regelung erfolgt erfindungsgemäß auf Basis des mittels des Durchflussmessers gemessenen Flusses der ersten Flüssigkeit aus dem ersten Behälter in Richtung Sprühdüse. Ein weiterer Parameter, der in die Regelung einfließt, ist das einzustellende Mischungsverhältnis. Dieses kann vom Benutzer vorgegeben werden, indem dieser das Mischungsverhältnis z.B. in die Kontrolleinheit eingibt; möglich ist aber auch, dass die Kontrolleinheit das Mischungsverhältnis durch eine Kommunikation mit einer Speichereinheit des zweiten Behälters erfasst.

Wie oben beschrieben ist die Kontrolleinheit in einer bevorzugten Ausführungsform der vorliegenden Erfindung mit dem auswechselbaren zweiten Behälter in der Weise verbunden, dass die Kontrolleinheit von dem auswechselbaren zweiten Behälter einen einzustellenden Verdünnungsgrad für das im auswechselbaren zweiten Behälter enthaltene Konzentrat empfangen kann.

Die Kontrolleinheit empfängt die Messwerte des Durchflussmessers in Bezug auf den Fluss der ersten Flüssigkeit und regelt den Fluss der zweiten Flüssigkeit, so dass die erste und die zweite Flüssigkeit das Sprühgerät über die Sprühdüse als Mischung mit einem konstanten Mischungsverhältnis verlassen. Unter "konstantem Mischungsverhältnis" wird verstanden, dass das Mischungsverhältnis über die Sprühdauer innerhalb eines vordefinierten Bereichs liegt.

In einer weiteren bevorzugten Ausführungsform erfasst die Kontrolleinheit die Menge an applizierter zweiter Flüssigkeit und speichert diesen Wert und überträgt diesen Wert beispielsweise zu einem vom Benutzer definierbaren Zeitpunkt an ein externes Computersystem. Auf diese Weise kann die Menge an applizierter zweiter Flüssigkeit nachgehalten werden.

In einer bevorzugten Ausführungsform wird zu der Menge der jeweils applizierten zweiten Flüssigkeit auch die Position (die GPS-gestützt ermittelt werden kann) der Applikation erfasst.

In einer weiteren bevorzugten Ausführungsform wird anhand der applizierten Menge an zweiter Flüssigkeit die Restmenge an zweiter Flüssigkeit im zweiten Behälter ermittelt. Vorzugsweise wird der Wert für diese Restmenge in eine Speichereinheit im Sprühgerät und/oder am zweiten Behälter gespeichert.

In einer bevorzugten Ausführungsform weist das erfindungsgemäße Sprühgerät einen Drucksensor auf, der den Druck in der Zuleitung zur Sprühdüse misst.

Werden die erste und die zweite Flüssigkeit in Richtung Sprühdüse gefördert, baut sich vor der Sprühdüse ein Druck auf. Die Höhe des Drucks richtet sich unter anderem nach der Geometrie der Sprühdüse. Es ist denkbar, dass eine Sprühdüse einen Druck benötigt, der innerhalb eines definierten Druckbereichs liegen muss, um ein für die Applikation geeignetes Sprühprofil zu erzeugen.

Daher ist der Drucksensor vorzugsweise mit der Kontrolleinheit verbunden, die den Fluss der ersten und der zweiten Flüssigkeit so regelt, dass der gemessene Druck innerhalb eines spezifizierten Bereichs liegt.

Die Erfindung wird nachfolgend anhand von Ausführungsbeispielen näher erläutert, ohne die Erfindung jedoch auf diese Beispiele beschränken zu wollen.

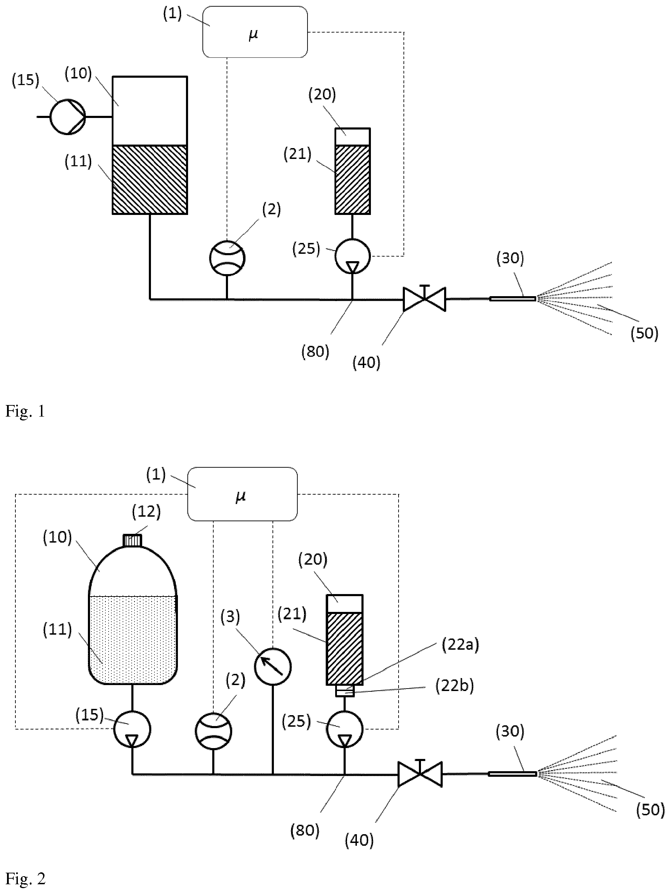

Figur 1 zeigt schematisch eine Ausführungsform des erfindungsgemäßen Sprühgeräts. Das Sprühgerät umfasst einen ersten Behälter (10) mit einer ersten Flüssigkeit (11), einen zweiten Behälter (20) mit einer zweiten Flüssigkeit (21), eine Sprühdüse (30), ein Ventil (40), Mittel (15) zur Förderung der ersten Flüssigkeit (11) aus dem ersten Behälter (10) in Richtung Sprühdüse (30), Mittel (25) zur Förderung der zweiten Flüssigkeit (21) aus dem zweiten Behälter (20) in Richtung Sprühdüse (30), eine Mischkammer (80), einen Durchflussmesser (2) zur Messung des Flusses der ersten Flüssigkeit (11) aus dem ersten Behälter (10) in Richtung Sprühdüse (30) und eine Kontrolleinheit (1).

Der erste Behälter (10) ist als druckfester Behälter ausgeführt.

Bei den Mitteln (15) zur Förderung der ersten Flüssigkeit (11) aus dem ersten Behälter (10) handelt es sich in Fig. 1 um eine Luftpumpe, mit der ein Überdruck in dem ersten Behälter (10) gegenüber dem Umgebungsdruck aufgebaut werden kann.

Bei den Mitteln (25) zur Förderung der zweiten Flüssigkeit (21) aus dem zweiten Behälter (20) handelt es sich in Fig. 1 um eine elektrisch betriebene Pumpe.

Die zweite Flüssigkeit (21) trifft in der Mischkammer (80) auf die erste Flüssigkeit (11).

Bei geöffnetem Ventil (40) wird die erste Flüssigkeit (11) mittels des Fördermittels (15) in Richtung Sprühdüse (30) gefördert. Der Fluss der ersten Flüssigkeit wird mittels Durchflussmesser (2) gemessen. Der Durchflussmesser (2) steht mit der Kontrolleinheit (1) in einer kommunikativen Verbindung (dargestellt durch die gestrichelte Linie). Der vom Durchflussmesser (2) gemessene Fluss wird an die Kontrolleinheit (1) übertragen. Die Kontrolleinheit (1) steht mit dem Mittel (25) zur Förderung der zweiten Flüssigkeit (21) in einer kommunikativen Verbindung (dargestellt durch die gestrichelte Linie). Die Kontrolleinheit (1) regelt den Fluss der zweiten Flüssigkeit (21) in Richtung Sprühdüse, so dass die erste Flüssigkeit und die zweite Flüssigkeit die Sprühdüse in Form einer Mischung (50) mit einem gleichbleibenden Mischungsverhältnis verlassen.

Figur 2 zeigt schematisch eine bevorzugte Ausführungsform des erfindungsgemäßen Sprühgeräts.

Das Sprühgerät umfasst eine Kontrolleinheit (1), einen Durchflussmesser (2), einen Drucksensor (3), einen ersten Behälter (10) mit einer ersten Flüssigkeit (11), einen zweiten Behälter (20) mit einer zweiten Flüssigkeit (21), eine erste Pumpe (15), eine zweite Pumpe (25), eine Sprühdüse (30), eine Mischkammer (80) und ein Ventil (40).

Der erste Behälter (10) ist als flexibler Beutel ausgeführt, der eine Öffnung zum Einfüllen der ersten Flüssigkeit (11) umfasst, wobei die Öffnung durch einen Verschluss (12) reversibel verschlossen werden kann.

Der zweite Behälter (20) ist als austauschbare Kartusche ausgeführt. Die Kartusche wird über Anschlussmittel (22a) zum Anschließen der Kartusche an das Sprühgerät mit dem Sprühgerät verbunden. Das Sprühgerät weise zu den Anschlussmitteln (22a) der Kartusche kompatible Anschlussmittel (22b) auf.

Die Kontrolleinheit (1) steht in einer kommunikativen Verbindung (dargestellt durch gestrichelte Linien) mit dem Durchflussmesser (2), dem Druckmesser (3), der ersten Pumpe (15) und der zweiten Pumpe (25). Die Pumpen (15, 25) werden vorzugsweise elektrisch betrieben.

Bei geöffnetem Ventil (40) wird die erste Flüssigkeit (11) aus dem ersten Behälter (10) mittels der ersten Pumpe (15) in Richtung Sprühdüse (30) gefördert. Mittels des Durchflussmessers (2) wird dieser Fluss der ersten Flüssigkeit (11) gemessen. Der Messwert wird an die Kontrolleinheit (1) übertragen. Gleichzeitig wird der Druck in der Zuleitung zur Sprühdüse (30) mittels des Drucksensors (3) gemessen. Dieser Messwert wird ebenfalls an die Kontrolleinheit (1) übermittelt. Die Kontrolleinheit (1) regelt über die erste Pumpe (15) und über die zweite Pumpe (25) den Fluss der ersten Flüssigkeit (11) und der zweiten Flüssigkeit (21) in Richtung Sprühdüse (30) so, dass die austretende Mischung (50) ein gleichbleibendes Mischverhältnis an erster und zweiter Flüssigkeit aufweist, und so, dass der Druck in der Zuleitung vor der Sprühdüse innerhalb eines vorgegebenen Bereichs liegt.

## Patentansprüche

1. Transportables Sprühgerät zur Schädlingsbekämpfung, umfassend
- einen ersten Behälter (10) zur Aufnahme einer ersten Flüssigkeit (11), wobei es sich bei der ersten Flüssigkeit um ein Verdünnungsmittel handelt,
- Mittel (22a) zum Anschluss eines zweiten Behälters (20) mit einer zweiten Flüssigkeit (21) an das Sprühgerät, wobei es sich bei der zweiten Flüssigkeit um ein Pestizid-Konzentrat handelt,
- eine Sprühdüse (30),
- eine erste (15) und eine zweite (25) elektrisch betriebene Pumpe zur Förderung der ersten und der zweiten Flüssigkeit aus ihren Behältern in Richtung Sprühdüse (30),
- einen Durchflussmesser (2) zur Messung des Flusses der ersten Flüssigkeit (11) aus dem ersten Behälter (10) in Richtung der Sprühdüse (30),
- eine Mischkammer (80), mit einem Einlass für die erste Flüssigkeit, einem Einlass für die zweite Flüssigkeit und einem Auslass für eine Mischung von erster und zweiter Flüssigkeit,
- eine Kontrolleinheit (1), die so konfiguriert ist, dass sie den Fluss der zweiten Flüssigkeit in Richtung der Sprühdüse (30) auf Basis des gemessenen Flusses der ersten Flüssigkeit so regelt, dass die erste Flüssigkeit und die zweite Flüssigkeit das Sprühgerät über die Sprühdüse (30) als Mischung mit einem konstanten Mischungsverhältnis verlassen,
- wobei das Sprühgerät als Rucksack-Gerät ausgeführt ist, wobei der erste Behälter mit Gurten zum Tragen auf dem Rücken ausgestattet ist, so dass ein Benutzer einen Teil des Sprühgeräts, das den ersten Behälter (10) umfasst, auf dem Rücken transportieren und tragen kann,
**dadurch gekennzeichnet, dass** die Mischkammer (80) ein Sieb mit einer Maschenweite im Bereich von 10 µm bis 500 µm, mehr bevorzugt 50 bis 250 µm, am meisten bevorzugt 80 µm bis 120 µm umfasst, durch das die zweite Flüssigkeit bei Betrieb des Sprühgeräts in die erste Flüssigkeit gedrückt wird oder durch das eine Mischung der ersten Flüssigkeit und der zweiten Flüssigkeit bei Betrieb des Sprühgeräts hindurchtritt.

2. Sprühgerät gemäß Anspruch, **dadurch gekennzeichnet, dass** das Volumen, das die zweite Flüssigkeit bei Betrieb des Sprühgeräts auf dem Weg vom zweiten Behälter (20) bis zur Mischkammer (80) durchströmt, kleiner ist als 50 mL, noch mehr bevorzugt kleiner als 30 mL, noch mehr bevorzugt kleiner als 10 mL.

3. Sprühgerät gemäß einem der Ansprüche 1 bis 2, wobei die Mischkammer (80) so gestaltet ist, dass die zweite Flüssigkeit bei Betrieb des Sprühgeräts in einem Winkel im Bereich von 20° bis 160°, bevorzugt 50° bis 130°, mehr bevorzugt 70° bis 110°, am meisten bevorzugt 80° bis 100° der ersten Flüssigkeit beigefügt wird.

4. Sprühgerät nach einem der Ansprüche 1 bis 3, **dadurch gekennzeichnet, dass** es sich bei den Mitteln (25) zur Förderung der zweiten Flüssigkeit (11) um eine elektrisch betriebene Pumpe handelt, die durch einen Schrittmotor angetrieben wird.

5. Sprühgerät nach einem der Ansprüche 1 bis 4, **dadurch gekennzeichnet ist, dass** die Sprühdüse (30) austauschbar ist.

6. Sprühgerät nach einem der Ansprüche 1 bis 5, umfassend einen Drucksensor (3), der den Druck in einer Zuleitung zur Sprühdüse (30) misst, wobei der Drucksensor (3) mit der Kontrolleinheit (1) verbunden ist und die Kontrolleinheit (1) so konfiguriert ist, dass sie den Druck vor der Sprühdüse (30) beim Sprühvorgang in einem vordefiniertem Bereich konstant hält.

7. Sprühgerät nach einem der Ansprüche 1 bis 6, umfassend einen zweiten Behälter (20), der austauschbar ist und die zweite Flüssigkeit enthält, wobei die erste Flüssigkeit (11) Wasser ist.

8. Verfahren zur Schädlingsbekämpfung durch Applikation einer Mischung aus einer ersten und einer zweiten Flüssigkeit auf ein Zielobjekt mittels eines transportablen Sprühgeräts, umfassend einen ersten Behälter, eine Sprühdüse und ein Ventil, wobei das Sprühgerät als Rucksack-Gerät ausgeführt ist, wobei der erste Behälter mit Gurten zum Tragen auf dem Rücken ausgestattet ist, so dass ein Benutzer einen Teil des Sprühgeräts, das den ersten Behälter (10) umfasst, auf dem Rücken transportieren und tragen kann,
wobei es sich bei der ersten Flüssigkeit um ein Verdünnungsmittel handelt,
wobei es sich bei der zweiten Flüssigkeit um ein Pestizid-Konzentrat handelt,
wobei das Verfahren die folgenden Schritte umfasst:
- Füllen des ersten Behälters mit der ersten Flüssigkeit,
- Anschließen eines zweiten Behälters mit der zweiten Flüssigkeit an das Sprühgerät,
- Richten der Sprühdüse auf das Zielobjekt,
- Öffnen des Ventils, und
- Applizieren der Mischung,
wobei bei Öffnen des Ventils die erste Flüssigkeit mit Hilfe einer ersten elektrisch betriebenen Pumpe aus dem ersten Behälter in Richtung Sprühdüse gefördert wird, die zweite Flüssigkeit durch eine zweite elektrisch betriebene Pumpe in Richtung Sprühdüse gefördert wird, der Fluss der ersten Flüssigkeit mittels eines Durchflussmessers gemessen wird und die Messwerte an eine Kontrolleinheit übertragen werden, die Kontrolleinheit den Fluss der zweiten Flüssigkeit aus dem zweiten Behälter in Richtung der Sprühdüse regelt, so dass die erste und die zweite Flüssigkeit in einem konstanten Mischungsverhältnis durch die Sprühdüse treten,
**dadurch gekennzeichnet, dass** die erste und die zweite Flüssigkeit in einer Mischkammer des Sprühgeräts zusammengeführt werden, die ein Sieb mit einer Maschenweite im Bereich von 10 µm bis 500 µm, mehr bevorzugt 50 bis 250 µm, am meisten bevorzugt 80 µm bis 120 µm umfasst, durch das die zweite Flüssigkeit in die erste Flüssigkeit gedrückt wird oder durch das eine Mischung der ersten Flüssigkeit und der zweiten Flüssigkeit hindurchtritt.

9. Verfahren gemäß einem der Ansprüche 8, **dadurch gekennzeichnet, dass** das Volumen, das die zweite Flüssigkeit auf dem Weg vom zweiten Behälter bis zur Mischkammer durchströmt, kleiner ist als 50 mL, noch mehr bevorzugt kleiner als 30 mL, noch mehr bevorzugt kleiner als 10 mL.

10. Verfahren nach einem der Ansprüche 8 bis 9, **dadurch gekennzeichnet, dass** das Sprühgerät einen Drucksensor umfasst, der den Druck in einer Zuleitung zur Sprühdüse misst und die Kontrolleinheit den Fluss der ersten und/oder der zweiten Flüssigkeit so einstellt, dass der Druck innerhalb eines vordefinierten Bereichs liegt.

11. Verfahren nach einem der Ansprüche 8 bis 10, **dadurch gekennzeichnet, dass** die zweite Flüssigkeit durch eine elektrisch betriebene Pumpe in Richtung Sprühdüse gefördert wird, die durch einen Schrittmotor angetrieben wird.

## Claims

1. Transportable spraying device for pest control, comprising
- a first container (10) for receiving a first liquid (11), wherein the first liquid is a diluent;
- means (22a) for connecting to the spraying device a second container (20) having a second liquid (21), wherein the second liquid is a pesticide concentrate;
- a spraying nozzle (30);
- a first (15) and a second (25) electrically operated pump for conveying the first and the second liquid from the respective containers in the direction of the spraying nozzle (30);
- a flow meter (2) for measuring the flow of the first liquid (11) from the first container (10) in the direction of the spraying nozzle (30);
- a mixing chamber (80), having an inlet for the first liquid, an inlet for the second liquid, and an outlet for the mixture of the first and the second liquid;
- a control unit (1) which is configured such that the latter regulates the flow of the second liquid in the direction of the spray nozzle (30) based on the measured flow of the first liquid such that the first liquid and the second liquid by way of the spraying nozzle (30) exit the spraying device as a mixture with a constant mixing ratio;
- wherein the spraying device is embodied as a backpack device, wherein the first container is equipped with straps for carrying on the back so that a user can transport and carry on his/her back a part of the spraying device that comprises the first container (10),
**characterized in that** the mixing chamber (80) comprises a screen with a mesh width in the range from 10 µm to 500 pm, more preferably 50 to 250 pm, most preferably 80 µm to 120 pm, through which the second liquid is forced into the first liquid when the spraying device is operating, or through which a mixture of the first liquid and of the second liquid passes when the spraying device is operating.

2. Spraying device according to Claim 1, **characterized in that** the volume which flows through the second liquid when the spraying device is operating, on the path from the second container (20) to the mixing chamber (80), is less than 50 mL, more preferably less than 30 mL, and even more preferably less than 10 mL.

3. Spraying device according to one of Claims 1 to 2, wherein the mixing chamber (80) is configured in such a way that when the spraying device is operating the second liquid is added to the first liquid at an angle in the range from 20° to 160°, preferably 50° to 130°, more preferably 70° to 110°, and most preferably 80° to 100°.

4. Spraying device according to one of Claims 1 to 3, **characterized in that** the means (25) for conveying the second liquid (11) are an electrically operated pump which is driven by a stepper motor.

5. Spraying device according to one of Claims 1 to 4, **characterized in that** the spraying nozzle (30) is replaceable.

6. Spraying device according to one of Claims 1 to 5, comprising a pressure sensor (3) which measures the pressure in a feed line leading to the spraying nozzle (30), wherein the pressure sensor (3) is connected to the control unit (1) and the control unit (1) is configured in such a way that it keeps the pressure upstream of the spraying nozzle (30) within a predefined range during the spraying process.

7. Spraying device according to one of Claims 1 to 6, comprising a second container (20), which is replaceable and contains the second liquid, wherein the first liquid (11) is water.

8. Method for pest control by applying a mixture of a first liquid and of a second liquid to a target object by means of a transportable spraying device, comprising a first container, a spraying nozzle and a valve, wherein the spraying device is embodied as a backpack device, wherein the first container is equipped with straps for carrying on the back so that a user can transport and carry a part of the spraying device that comprises the first container (10) on his/her back,
wherein the first liquid is a diluent;
wherein the second liquid is a pesticide concentrate;
wherein the method comprises the following steps:
- filling the first container with the first liquid;
- connecting a second container having the second liquid to the spraying device;
- directing the spraying nozzle onto the target object;
- opening the valve; and
- applying the mixture;
wherein, when the valve is opened, the first liquid is conveyed from the first container in the direction of the spraying nozzle with the aid of a first electrically operated pump, the second liquid is conveyed in the direction of the spraying nozzle by a second electrically operated pump, the flow of the first liquid is measured by means of a flow meter, and the measured values are transmitted to a control unit, the control unit regulates the flow of the second liquid from the second container in the direction of the spraying nozzle, with the result that the first and the second liquid pass through the spraying nozzle with a constant mixing ratio,
**characterized in that** the first and the second liquid are combined in a mixing chamber of the spraying device, which mixing chamber comprises a screen with a mesh width in the range from 10 µm to 500 pm, more preferably 50 to 250 pm, most preferably 80 µm to 120 pm, through which the second liquid is forced into the first liquid, or through which a mixture of the first liquid and of the second liquid passes.

9. Method according to Claim 8, **characterized in that** the volume which flows through the second liquid on the path from the second container to the mixing chamber is less than 50 mL, more preferably less than 30 mL, and even more preferably less than 10 mL.

10. Method according to one of Claims 8 to 9, **characterized in that** the spraying device comprises a pressure sensor which measures the pressure in a feed line leading to the spraying nozzle and the control unit sets the flow of the first and/or second liquid in such a way that the pressure is within a predefined range.

11. Method according to one of Claims 8 to 10, **characterized in that** the second liquid is conveyed in the direction of the spraying nozzle by an electrically operated pump which is driven by a stepper motor.

## Revendications

1. Pulvérisateur transportable destiné à la lutte contre les nuisibles, ledit pulvérisateur comprenant
- un premier récipient (10) destiné à recevoir un premier liquide (11), le premier liquide étant un diluant,
- des moyens (22a) destinés à raccorder un deuxième récipient (20) comportant un deuxième liquide (21) au pulvérisateur, le deuxième liquide étant un concentré de pesticide,
- une buse de pulvérisation (30),
- une première (15) et une deuxième (25) pompe électrique destinées à acheminer le premier et le deuxième liquide de leurs récipients en direction de la buse de pulvérisation (30),
- un débitmètre (2) destiné à mesurer le flux du premier liquide (11) depuis le premier récipient (10) en direction de la buse de pulvérisation (30),
- une chambre de mélange (80) comprenant une entrée destinée au premier liquide, une entrée destinée au deuxième liquide et une sortie destinée à un mélange des premier et deuxième liquides,
- une unité de commande (1) conçue pour réguler le flux du deuxième liquide en direction de la buse de pulvérisation (30) sur la base du flux mesuré du premier liquide de sorte que le premier liquide et le deuxième liquide quittent le pulvérisateur par le biais de la buse de pulvérisation (30) sous la forme d'un mélange avec un rapport de mélange constant,
- le pulvérisateur étant conçu comme un dispositif dorsal, le premier récipient étant équipé de sangles destinées au portage sur le dos de sorte qu'un utilisateur puisse transporter et porter sur son dos une partie du pulvérisateur qui comprend le premier récipient (10),
**caractérisé en ce que** la chambre de mélange (80) comprend un tamis ayant une taille de maille dans la gamme de 10 µm à 500 pm, plus préférablement de 50 à 250 pm, le plus préférablement de 80 µm à 120 pm, à travers lequel le deuxième liquide est pressé dans le premier liquide pendant le fonctionnement du pulvérisateur ou à travers lequel un mélange du premier liquide et du deuxième liquide passe pendant le fonctionnement du pulvérisateur.

2. Pulvérisateur selon la revendication, **caractérisé en ce que** le volume parcouru par le deuxième liquide pendant le fonctionnement du pulvérisateur sur le chemin allant du deuxième récipient (20) à la chambre de mélange (80) est inférieur à 50 ml, encore plus préférablement inférieur à 30 ml, encore plus préférablement inférieur à 10 ml.

3. Pulvérisateur selon l'une des revendications 1 à 2, la chambre de mélange (80) étant conçue de sorte que le deuxième liquide soit ajouté au premier liquide à un angle dans la gamme de 20° à 160°, de préférence de 50° à 130°, plus préférablement de 70° à 110°, le plus préférablement de 80° à 100° pendant le fonctionnement du pulvérisateur.

4. Pulvérisateur selon l'une des revendications 1 à 3, **caractérisé en ce que** les moyens (25) d'acheminement du deuxième liquide (11) sont une pompe électrique qui est entraînée par un moteur pas à pas.

5. Pulvérisateur selon l'une des revendications 1 à 4, **caractérisé en ce que** la buse de pulvérisation (30) est remplaçable.

6. Pulvérisateur selon l'une des revendications 1 à 5, comprenant un capteur de pression (3) qui mesure la pression dans une conduite d'alimentation de la buse de pulvérisation (30), le capteur de pression (3) étant relié à l'unité de commande (1) et l'unité de commande (1) étant conçue de manière à maintenir constante la pression en amont de la buse de pulvérisation (30) dans une gamme prédéfinie pendant le processus de pulvérisation.

7. Pulvérisateur selon l'une des revendications 1 à 6, comprenant un deuxième récipient (20) remplaçable et contenant le deuxième liquide, le premier liquide (11) étant de l'eau.

8. Procédé de lutte contre les nuisibles par application d'un mélange d'un premier et d'un deuxième liquide sur un objet cible à l'aide d'un pulvérisateur transportable, comprenant un premier récipient, une buse de pulvérisation et une vanne, le pulvérisateur étant conçu comme un dispositif dorsal, le premier récipient étant équipé de sangles destinées au portage sur le dos de sorte qu'un utilisateur puisse transporter et porter sur son dos une partie du pulvérisateur qui comprend le premier récipient (10),
le premier liquide étant un diluant,
le deuxième liquide étant un concentré de pesticide,
le procédé comprenant les étapes suivantes :
- remplir le premier récipient avec le premier liquide,
- raccorder un deuxième récipient contenant le deuxième liquide au pulvérisateur,
- diriger la buse de pulvérisation vers l'objet cible,
- ouvrir la vanne, et
- appliquer le mélange,
lorsque la vanne est ouverte, le premier liquide étant acheminé du premier récipient en direction de la buse de pulvérisation à l'aide d'une première pompe électrique, le deuxième liquide étant acheminé en direction de la buse de pulvérisation par une deuxième pompe électrique, le flux du premier liquide étant mesuré au moyen d'un débitmètre et les valeurs de mesure étant transmises à une unité de commande, l'unité de commande régulant le flux du deuxième liquide du deuxième récipient en direction de la buse de pulvérisation de sorte que le premier et le deuxième liquide traversent la buse de pulvérisation dans un rapport de mélange constant,
**caractérisé en ce que** le premier et le deuxième liquide sont réunis dans une chambre de mélange du pulvérisateur, laquelle comprend un tamis ayant une taille de maille dans la gamme de 10 µm à 500 pm, plus préférablement de 50 à 250 pm, le plus préférablement de 80 µm à 120 pm, à travers lequel le deuxième liquide est pressé dans le premier liquide ou à travers lequel passe un mélange du premier liquide et du deuxième liquide.

9. Procédé selon la revendication 8, **caractérisé en ce que** le volume parcouru par le deuxième liquide sur le chemin allant du deuxième récipient à la chambre de mélange est inférieur à 50 ml, encore plus préférablement inférieur à 30 ml, encore plus préférablement inférieur à 10 ml.

10. Procédé selon l'une des revendications 8 à 9, **caractérisé en ce que** le pulvérisateur comprend un capteur de pression qui mesure la pression dans une conduite d'alimentation de la buse de pulvérisation et l'unité de commande régule le flux du premier et/ou du deuxième liquide de sorte que la pression soit dans une gamme prédéfinie.

11. Procédé selon l'une des revendications 8 à 10, **caractérisé en ce que** le deuxième liquide est acheminé par une pompe électrique en direction de la buse de pulvérisation, laquelle est entraînée par un moteur pas à pas.
